(19) Europäisches Patentamt
European Patent Office
Office européen des brevets

(11) **EP 2 638 528 B1**

## (12) FASCICULE DE BREVET EUROPEEN

(45) Date de publication et mention
de la délivrance du brevet:
**01.08.2018 Bulletin 2018/31**

(21) Numéro de dépôt: **11794529.5**

(22) Date de dépôt: **14.11.2011**

(51) Int Cl.:
*H04W 4/42* *(2018.01)*    *G08G 5/00* *(2006.01)*
*B64D 45/00* *(2006.01)*    *G07C 5/00* *(2006.01)*
*H04B 7/185* *(2006.01)*

(86) Numéro de dépôt international:
**PCT/FR2011/000605**

(87) Numéro de publication internationale:
**WO 2012/062982 (18.05.2012 Gazette 2012/20)**

(54) **PROCÉDÉ ET SYSTÈME DE TRANSMISSION ET DE RÉCEPTION DE DONNÉES PROVENANT D'UNE BOITE NOIRE D'AÉRONEF**

VERFAHREN UND SYSTEM ZUM SENDEN UND EMPFANGEN VON DATEN AUS EINER BLACK BOX EINES FLUGZEUGS

METHOD AND SYSTEM FOR TRANSMISSION AND RECEPTION OF DATA FROM AN AIRCRAFT BLACK BOX

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **12.11.2010 FR 1059336**

(43) Date de publication de la demande:
**18.09.2013 Bulletin 2013/38**

(73) Titulaire: **Airbus**
**31700 Blagnac (FR)**

(72) Inventeurs:
• **LEROY, Amaury**
**78310 Maurepas (FR)**
• **VERMANDE, Séverine**
**31620 Cepet (FR)**

(74) Mandataire: **Santarelli**
**49, avenue des Champs-Elysées**
**75008 Paris (FR)**

(56) Documents cités:
EP-A1- 2 237 614      EP-A2- 1 017 188
DE-A1- 10 308 972     US-A- 6 167 239
US-A1- 2004 008 253   US-A1- 2004 039 497
US-A1- 2007 072 639   US-B1- 7 085 562

## Description

L'invention est relative à un procédé de transmission et de réception de données provenant d'une boite noire embarquée à bord d'un aéronef.

Une boite noire également appelée enregistreur est un dispositif embarqué à bord des aéronefs et qui stocke durant le vol différentes données de vol, des données sonores et éventuellement des données visuelles. Les données de vol proviennent de différents capteurs présents à bord de l'aéronef et qui recueillent différentes données de vol, ainsi que de calculateurs qui fournissent des paramètres de vol.

Les données stockées dans une boite noire comprennent également des enregistrements audio et éventuellement vidéo de l'activité interne au cockpit (discussions entre membres de l'équipage, ...).

De telles boites noires, sont généralement de couleur orange et équipées d'un émetteur radio afin de pouvoir être localisées plus facilement, par exemple, à la suite d'une catastrophe aérienne.

Toutefois, il s'avère que la récupération de ces boites noires consécutivement à une catastrophe aérienne est très délicate, notamment en raison du fait que la grande majorité de la surface terrestre présente une topologie accidentée.

En effet, la récupération de boites noires au fond des océans ou dans des crevasses au sein de chaînes de montagnes est très difficile.

Cependant, les données contenues dans ces dispositifs sont très importantes, voire primordiales, pour connaître les causes d'une catastrophe aérienne et travailler à l'amélioration de la cause en vue d'éviter que le même genre de catastrophe ne se reproduise.

La présente invention vise à remédier à cet inconvénient grâce à une communication de données stockées à bord d'une ou de plusieurs boites noires d'un aéronef durant le vol de celui-ci, communication qui s'effectue de l'aéronef vers l'extérieur de celui-ci et, plus précisément vers au moins un autre aéronef.

Le document US20040039497 divulgue un exemple de transmission de données entre aéronefs en vol.

Selon un premier aspect, l'invention a plus particulièrement pour objet un procédé de transmission de données en vol, comportant une étape de transmission de données entre un premier aéronef et au moins un deuxième aéronef, les données transmises étant des données stockées dans au moins une boite noire embarquée à bord du premier aéronef. Le procédé comporte une étape de vérification par ledit premier aéronef si ledit premier aéronef est en un mode alerte, le mode alerte indiquant que ledit premier aéronef fait face à un ou plusieurs problèmes critiques pour ledit premier aéronef, et, dans le cas où ledit premier aéronef est en mode alerte, une étape d'indication que les données à transmettre proviennent d'un aéronef en mode alerte afin de rendre prioritaire la réception par le deuxième aéronef des données émises par le premier aéronef en mode alerte sur les autres transmissions qui ne sont pas dans ce mode. Ainsi, les données d'une boite noire ou enregistreur sont transmises durant le vol hors de l'aéronef concerné, permettant ainsi de s'assurer que ces données seront accessibles (car sauvegardées dans un autre aéronef) dans l'hypothèse où une catastrophe aérienne surviendrait sur cet aéronef et que la boite noire ne pourrait pas être retrouvée ou serait illisible.

On notera que le deuxième aéronef recevant ces données peut, lorsqu'il atterrit, permettre de faire une copie de ces données au sol.

De façon générale, la transmission de telles données entre deux aéronefs peut être effectuée en permanence en fonction des connexions de communication possibles ou de façon intermittente, régulière ou non, de façon automatique ou suivant un déclenchement manuel initié en cas d'urgence par un membre d'équipage.

On notera que le premier aéronef peut, selon les circonstances, transmettre des données de boite(s) noire(s) à plusieurs aéronefs et non à un seul afin d'accroître les chances de transmettre de façon fiable, et donc de sauvegarder ces données.

Il convient de noter que le deuxième aéronef auquel sont transmises les données n'est pas connu à l'avance. Il est sélectionné après qu'une décision de transmettre les données ait été prise (ex : décision prise à bord du premier aéronef).

Le fait de transmettre les données vers un deuxième aéronef qui n'est pas un aéronef prédéterminé procure de la souplesse et de la fiabilité à la transmission de données et permet de s'assurer que les données peuvent être transmises à tout instant (en sélectionnant un deuxième aéronef au moment où cela est nécessaire) et quelle que soit la zone géographique survolée.

En effet, l'invention permet de sauvegarder les données de boite(s) noire(s) même si la zone survolée n'est pas couverte par satellite.

Par ailleurs, d'autres données peuvent être transmises avec les données de boite noire, par exemple, selon les circonstances et les applications envisagées.

Selon une caractéristique possible, l'étape de transmission de données est réalisée par l'intermédiaire d'un moyen de communication ayant une bande passante d'au moins 100 Kbits/s. En effet, une telle bande passante est nécessaire pour transmettre les données de vol et les données audio enregistrées dans le cockpit.

En cas de transmission de données vidéo une bande passante d'au moins 2 Mbits/s serait préférable.

Selon une caractéristique possible, le procédé comporte une étape préalable de stockage des données à transmettre dans un espace de stockage intermédiaire distinct de ladite au moins une boite noire.

Il convient en effet de pouvoir disposer des données que l'on souhaite transmettre dans l'espace de stockage distinct de ladite au moins une boite noire afin de pouvoir effectuer un traitement sur ces données sans avoir à modifier la conception de ladite au moins une boite noire.

Selon une caractéristique possible, le procédé comporte une étape préalable de traitement des données à transmettre en vue de réduire la bande passante nécessaire pour transmettre ces données.

Ceci permet en effet de libérer de la bande passante sur le réseau pour permettre l'établissement d'autres communications ou transmettre un volume de données supérieur. Selon une caractéristique possible, le procédé comporte une étape préalable de chiffrement des données à transmettre. Cette étape vise à garantir la confidentialité des données qui vont être transmises entre les deux aéronefs.

Ainsi, seules les entités autorisées disposant des moyens de déchiffrement adaptés sont aptes à prendre connaissance des données transmises.

Un aéronef recevant des données de boite(s) noire(s) provenant d'un autre aéronef n'est généralement pas considéré comme une entité autorisée à lire ces données et, à cet égard, ne dispose donc pas de moyens de déchiffrement. Ces données reçues sont donc illisibles pour l'aéronef récepteur.

Selon une caractéristique possible, le procédé comporte une étape de sélection d'un moyen de communication parmi une pluralité de moyens de communication.

On notera qu'un moyen de communication peut être choisi de façon préférentielle pour être utilisé en premier (exemple : choix du lien radio) et d'autres moyens sont envisagés si le moyen préférentiel n'est par exemple pas disponible ou, par exemple, s'il ne satisfait pas à un critère prédéterminé par rapport aux nouvelles conditions de vol des premier et deuxième aéronefs.

La transmission de données est par exemple effectuée par un moyen radio ou par un autre moyen de communication sans fil (exemple : réseau de téléphonie mobile, WiMax...) ou encore par un moyen satellite.

Selon un autre aspect, la transmission des données est effectuée dans un réseau de communication comprenant des noeuds mobiles de communication qui sont des aéronefs en vol.

La transmission de telles données vers un autre aéronef constitue une sécurité pour ces données puisqu'elle permet ainsi d'en effectuer une copie (sauvegarde) hors de l'aéronef concerné.

Selon une caractéristique possible, le procédé comporte une étape préalable de recherche dans le réseau d'au moins un noeud mobile de communication en vol avec lequel le premier aéronef (noeud mobile émetteur) est susceptible de communiquer.

Selon une caractéristique possible, le procédé comporte, préalablement à l'étape de transmission, une étape de sélection en vol d'au moins un noeud mobile de communication, non prédéterminé, ledit au moins un noeud étant sélectionné parmi un ensemble de noeuds mobiles de communication du réseau en fonction d'au moins un critère de sélection prédéterminé.

De façon générale, cette sélection vise à déterminer par exemple le "*meilleur*" noeud, c'est-à-dire le noeud qui est le plus approprié par rapport au(x) critère(s) de sélection appliqué(s) à un instant donné.

Cela permet de s'assurer qu'il y aura toujours un noeud récepteur (non prédéterminé) à portée de communication du noeud émetteur (premier aéronef) afin de pouvoir transmettre les données de boite(s) noire(s) et ce, quel que soit le moment et quelle que soit la zone géographique survolée.

Selon une caractéristique, ledit au moins un critère de sélection prédéterminé est l'un au moins des critères suivants : aéronef(s) dont provient un rapport signal sur bruit (qualité du signal) supérieur à un seuil prédéterminé, aéronef(s) ayant des plans de vols similaires ou identiques (pour maximaliser la durée de disponibilité de l'aéronef récepteur), aéronef(s) appartenant à la même compagnie aérienne ou à une même alliance regroupant plusieurs compagnies aériennes, aéronef(s) du même constructeur, aéronef(s) à portée de communication, aéronef le plus éloigné du premier aéronef (pour réduire le mouvement relatif entre l'aéronef émetteur et l'aéronef récepteur), aéronef(s) en phase de descente.

Ces critères relèvent de différentes catégories. Certains critères sont relatifs à la communication entre les aéronefs (rapport signal sur bruit, aéronef volant dans la même direction, aéronef à portée de communication...), tandis que d'autres sont plutôt non techniques (aéronef(s) de la même compagnie aérienne, du même constructeur...).

Le ou les noeuds les plus appropriés parmi les noeuds du réseau sont par exemple identifiés à partir du rapport signal sur bruit provenant des noeuds, en privilégiant par exemple le ou les rapports signal sur bruit maximum.

Alternativement, en fonction de la direction de l'aéronef concerné, on peut privilégier l'aéronef qui restera le plus longtemps dans le champ (à portée de communication) de l'aéronef concerné (aéronef allant dans la même direction).

Ainsi, plusieurs aéronefs en vol constituent chacun des noeuds mobiles de communication d'un réseau de communication et des données de boites noires sont transmises entre un premier et un deuxième noeuds mobiles de ce réseau, de façon permanente ou quasi permanente, par exemple à une fréquence déterminée.

D'autres critères de sélection peuvent être appliqués seuls ou en combinaison avec l'un ou l'autre des critères précédents.

Selon une caractéristique possible, le procédé comporte une étape de demande d'établissement d'une connexion avec le noeud sélectionné, préalablement à la transmission des données.

On notera que les étapes de recherche de noeuds, de sélection du noeud le plus adapté et de demande d'établissement d'une connexion sont généralement réalisées par le noeud émetteur.

Selon un autre aspect, l'invention vise un procédé de réception de données qui comporte une étape de réception en vol, en provenance d'un premier aéronef, de données stockées dans au moins une boite noire embarquée à bord du premier aéronef, l'étape de réception étant effectuée à bord d'un deuxième aéronef.

Selon une caractéristique, le procédé de réception de données comporte une étape préalable de vérification de la disponibilité d'un espace de stockage en vue d'y stocker les données à recevoir.

Il est en effet préférable qu'un espace soit disponible pour la réception de ces données afin d'éviter une transmission inutile.

Cette vérification est effectuée sur le deuxième aéronef, à la demande du premier, après réception de la demande d'établissement de connexion.

Selon une caractéristique, le procédé comporte une étape de stockage des données reçues soit dans un espace de stockage disponible à bord du deuxième aéronef recevant les données soit, en cas d'indisponibilité de cet espace, dans un espace de stockage réservé à cet effet.

L'invention a également pour objet un système de transmission de données, caractérisé en ce qu'il comporte des moyens de transmission de données en vol entre un premier aéronef et au moins un deuxième aéronef, les données transmises étant des données stockées dans au moins une boite noire embarquée à bord du premier aéronef. Le système est configuré pour vérifier si ledit premier aéronef est en un mode alerte, le mode alerte indiquant que ledit premier aéronef fait face à un ou plusieurs problèmes critiques pour ledit premier aéronef, et, dans le cas où ledit premier aéronef est en mode alerte, pour indiquer que les données à transmettre proviennent d'un aéronef en mode alerte afin de rendre prioritaire la réception par le deuxième aéronef des données émises par le premier aéronef en mode alerte sur les autres transmissions qui ne sont pas dans ce mode. Le système de transmission comprend, sous la forme de moyens correspondants, une ou plusieurs des caractéristiques de procédé exposées ci-dessus, voire toutes ces caractéristiques et bénéficie ainsi des mêmes avantages.

L'invention a en outre pour objet un système de communication comportant un système de transmission de données selon la revendication 9 embarqué à bord du premier aéronef et un système (50) de réception de données embarqué à bord du deuxième aéronef, caractérisé en ce que ledit système de réception de données comporte des moyens (52) de réception en vol en provenance du premier aéronef (30), de données stockées dans au moins une boite noire (12, 14) embarquée à bord du premier aéronef. Selon un autre aspect, l'invention vise un aéronef comprenant un système de transmission et/ou un système de communication, tels que brièvement exposés ci-dessus.

D'autres caractéristiques et avantages apparaitront au cours de la description qui va suivre, donnée uniquement à titre d'exemples non limitatifs et faite en référence aux dessins annexés, sur lesquels :

- la Figure 1 est une vue schématique générale d'un système de transmission selon un mode de réalisation de l'invention ;
- la Figure 2 est une vue schématique représentant plusieurs aéronefs constituant des noeuds mobiles d'un réseau de communication ;
- la Figure 3 est un algorithme général d'établissement d'une connexion entre deux aéronefs ;
- la Figure 4 est un schéma général illustrant un système de réception selon un mode de réalisation de l'invention ;
- la Figure 5 est un algorithme d'un procédé de transmission de données selon l'invention ;
- les Figures 6a et 6b sont deux algorithmes respectivement d'un procédé de connexion et d'un procédé de réception de données selon l'invention.

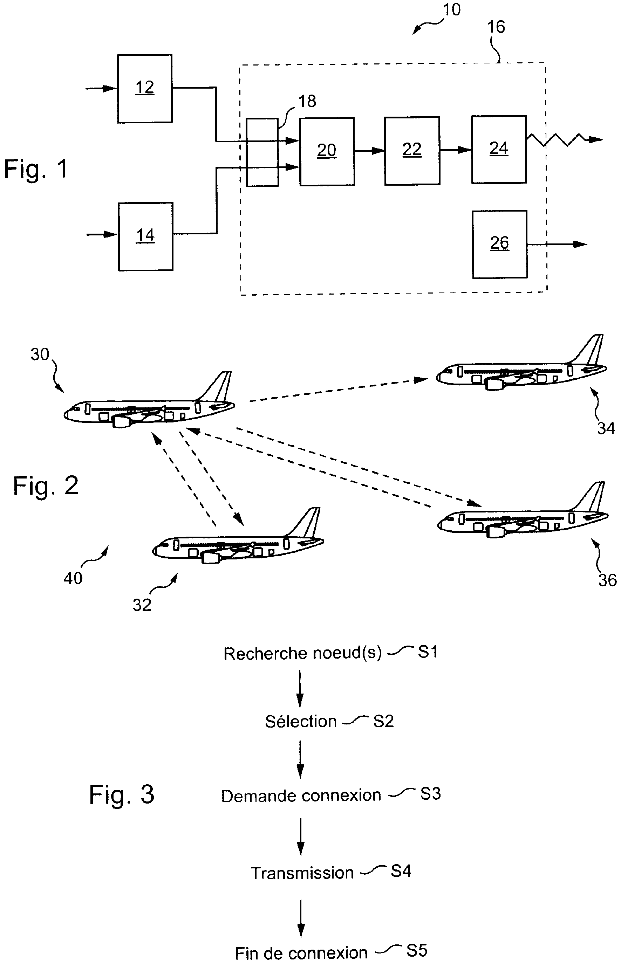

Comme représenté de façon générale à la Figure 1 et désigné par la référence notée 10, un système selon l'invention embarqué à bord d'un aéronef comprend deux boites noires ou enregistreurs 12 et 14 stockant, pour l'un, un ensemble de données provenant de différents calculateurs embarqués à bord de l'aéronef et qui sont par exemple des données de vol (données reflétant le comportement de l'aéronef en vol), et, pour l'autre, des données audio enregistrées dans le cockpit. On notera que selon l'invention les données précitées peuvent être réparties différemment entre les deux boites noires et que d'autres types de données peuvent être stockées dans l'une et/ou l'autre de ces boites telles que des données vidéo enregistrées dans le cockpit et dans l'environnement de l'aéronef. Par ailleurs, selon une autre variante une ou plusieurs autres boites noires peuvent être ajoutées pour stocker différemment les données de vol et les données audio et/ou d'autres types de données telles que les données vidéo précitées. Dans la suite de la description lorsqu'il sera fait référence à l'une et/ou à l'autre des boites noires 12 et 14, il est entendu que cela pourra s'appliquer à un nombre différents de boites noires et à tout type de données.

Le système 10 comprend en outre un système 16 de transmission de données.

Le système 16 comprend des moyens 18 de chiffrement des données qui sont destinées à être transmises hors de l'aéronef et qui proviennent de l'une ou des deux boites noires 12, 14.

On notera que les données contenues dans l'une et/ou l'autre des boites noires peuvent être identiques d'une boite noire à l'autre ou différentes.

Par ailleurs, selon une variante, les données provenant de l'une et/ou de l'autre des boites noires peuvent correspondre à l'ensemble des données stockées dans chacune d'elles ou à une sélection de ces données.

On notera que le chiffrement des données a pour objectif de garantir la confidentialité des données qui seront transmises. En particulier, ces données seront transmises à un autre aéronef et elles ne doivent pouvoir être lues que par une entité dûment autorisée ou par une collection d'entités autorisées. Pour ce faire, le chiffrement a pour effet de rendre les données inintelligibles.

Le chiffrement est par exemple réalisé au moyen d'un système de clé publique et de clé privée, l'utilisation de la clé publique possédée par chacune des entités concernées (émetteur et récepteur autorisés à prendre connaissance des données) étant nécessaire pour le déchiffrement.

On notera que des schémas à seuils peuvent également être mis en oeuvre pour assurer une plus grande confidentialité des données. Le principe du schéma à seuil est que plusieurs entités autorisées à déchiffrer les données partagent la clé de déchiffrement : ainsi, les entités devront être toutes d'accord pour procéder au déchiffrement.

Le système 16 comprend de façon optionnelle, des moyens de traitement préalable des données provenant de l'une et/ou l'autre des boites noires 12 et 14.

Des moyens de sélection de données peuvent par exemple faire partie des moyens 18.

On notera que les moyens de traitement optionnels assurent par exemple une optimisation du volume des données afin de réduire la bande passante utilisée pour leur transmission.

A titre d'exemple, la bande passante efficace monodirectionnelle (non satellite) entre deux aéronefs est de 5Mb/s.

Le système 16 comprend également un support physique de stockage 20 (par exemple, un support magnétique) qui peut être une zone de mémoire tampon ou un espace de stockage sur un disque dur.

Les données provenant de l'une et/ou de l'autre des boites noires, préalablement chiffrées, sont stockées dans l'espace de stockage intermédiaire séparé 20.

Le système 16 comprend également des moyens 22 de traitement des données (exemple : microprocesseur, circuit électronique dédié, composant programmable de type FPGA...) issues de l'espace de stockage 20.

Ce traitement peut remplir plusieurs fonctions.

Tout d'abord, ce traitement permet une mise en forme des données sous la forme d'une trame de données.

Cette mise en forme consiste, par exemple, à structurer les données sous la forme d'un signal comprenant un ou plusieurs en-têtes et un corps de signal contenant les données utiles.

Le traitement peut également comprendre un deuxième chiffrement qui permet ici de garantir l'intégrité des données préalablement chiffrées par les moyens 18 et qui vont être transmises.

Ce deuxième chiffrement consiste par exemple à calculer une signature à partir des données qui ont été préalablement chiffrées. Une telle signature peut être obtenue par calcul à partir d'une formule mathématique appliquée aux données chiffrées. Les données chiffrées seront ensuite transmises avec la signature ainsi calculée.

Le système 16 comprend également des moyens 24 de transmission des données. Ces moyens utilisent une procédure de communication entre un aéronef émetteur et un aéronef récepteur qui est liée au protocole de communication choisi pour le moyen de communication utilisé. Cette procédure établie entre les deux aéronefs permet de rendre le signal transmis plus robuste dans la mesure où il permet la détection d'erreurs : paquet non arrivé à destination, perte d'intégrité du paquet... Ainsi, on peut réémettre le paquet en cas d'erreur détectée.

Le système 16 comprend en outre des moyens 26 permettant d'établir une ou plusieurs connexions entre l'aéronef comprenant le système 10 et un ou plusieurs aéronefs.

Les aéronefs en vol constituent des noeuds mobiles d'un réseau de communication.

La Figure 2 illustre de façon schématique plusieurs noeuds mobiles 30, 32, 34, 36 d'un tel réseau de communication 40.

Sur cette Figure, l'aéronef représenté par le noeud mobile 30 correspond à l'aéronef comprenant le système 10 de la Figure 1.

Le protocole de communication utilisé pour la transmission des données supporte un mode de connexion connecté.

On notera que les moyens 26 de gestion de la communication effectuent préalablement une phase de découverte de la topologie du réseau de communication dont fait partie l'aéronef concerné.

Lors de cette phase de découverte, les moyens 26 examinent, par l'envoi d'un signal et l'éventuelle réception d'un signal de réponse, si un noeud mobile de communication se trouve à portée radio.

La transmission est effectuée en effet par exemple par un lien de communication radio fréquence bidirectionnelle.

L'avantage d'une communication de type radio fréquence réside dans la largeur de la bande passante et dans sa gratuité à l'utilisation ou bien dans le fait que le coût est compris dans un forfait, sans surcoût dépendant de la consommation.

Si aucune réponse n'est reçue, de façon optionnelle les moyens 16 peuvent envoyer le signal sur un lien satellite soit afin de pouvoir identifier, par retour de signal, un ou plusieurs noeuds de communication mobiles susceptibles de constituer un pair de communication en mode connecté suivant ce lien de communication soit afin de l'envoyer à une installation au sol.

L'avantage d'une communication par satellite réside dans la couverture géographique de celle-ci et dans le fait qu'elle ne dépend pas des conditions atmosphériques.

Les moyens 26 comprennent plus particulièrement plusieurs sous-moyens :

- des sous-moyens de recherche d'au moins un noeud mobile de communication dans le réseau (par exemple, en référence à la Figure 2 la recherche est effectuée parmi les noeuds 32, 34 et 36 du réseau 40) ;

- des sous-moyens de sélection d'un noeud mobile de communication parmi les noeuds recherchés, ce noeud satisfaisant à un ou plusieurs critères prédéterminés (la sélection d'un noeud particulier parmi les noeuds 32, 34 et 36 de la Figure 2 est effectuée par exemple par rapport à un critère prédéterminé tel que le meilleur rapport signal sur bruit fourni par ces noeuds ; un autre critère de sélection d'un noeud peut être de choisir le noeud du réseau qui reste le plus longtemps à portée de communication (par exemple : le noeud 30).

- des sous-moyens d'établissement d'une connexion avec le noeud sélectionné.

Lorsqu'une connexion est établie avec le noeud sélectionné le système de transmission 16 procède alors à la transmission des données (qui ont été traitées comme indiqué ci-dessus) à destination du noeud sélectionné.

On notera que le noeud sélectionné n'était pas déterminé par avance. Le noeud 30 n'a été informé de l'existence du noeud sélectionné pour recevoir ses données qu'à l'issue du processus de sélection qui vient d'être décrit.

La Figure 3 illustre un mécanisme d'établissement d'une connexion entre l'aéronef 30 et l'un des aéronefs 32, 34, 36 de la Figure 2.

Comme représenté à la Figure 3, l'algorithme comprend une première étape S1 de recherche d'un ou plusieurs noeuds mobiles de communication dans le réseau 40.

Comme indiqué précédemment, lors de cette étape de recherche le type de réseau de communication qui sera utilisé pour la transmission est sélectionné, à savoir un réseau de communication radio, un réseau de communication optique, ou un réseau de communication sans fil d'un autre type, voire un réseau de communication satellite.

Pour chaque couche physique mise en oeuvre (radio, satellite, optique...) se déroule la recherche du meilleur noeud. La sélection de la meilleure couche physique est faite, par exemple, dans le logiciel dont l'algorithme est représenté sur la Figure 3. Un ordre de préférence de la couche physique est par exemple défini. Par exemple, tant que la communication radio fréquence est disponible (i.e. des noeuds sont à portée et disponibles pour une communication) on choisit ce support, sinon le réseau 4G est choisi, ou bien sinon le réseau satellite.

Dans chacune des trois étapes de l'exemple, se déroule la recherche du meilleur noeud.

Comme dans l'exemple de la Figure 2, un réseau de communication de type radio fréquence a par exemple été choisi et il convient alors de sélectionner le ou les noeuds les plus appropriés afin de fiabiliser et d'optimiser les échanges de données entre le noeud 30 et ce ou ces noeuds.

L'étape suivante de sélection S2 prévoit de sélectionner un ou plusieurs noeuds qui satisfont à un ou plusieurs critères prédéterminés.

L'un des critères prédéterminés est par exemple la maximisation du rapport signal sur bruit du signal provenant d'un noeud.

Un autre critère peut par exemple résider dans le ou les aéronefs qui présentent des plans de vol similaires à celui de l'aéronef 30 afin de maximiser la durée de disponibilité du ou des noeuds.

On peut également utiliser à titre de critère la recherche des aéronefs appartenant à la même compagnie aérienne que l'aéronef 30.

Un seul ou plusieurs de ces critères combinés peuvent être utilisés.

On notera que les étapes de recherche et de sélection sont effectuées soit périodiquement soit sur demande, par exemple à la suite d'une perte de connexion avec un aéronef.

L'algorithme de la Figure 3 comporte une étape S3 de demande de connexion avec le ou les noeuds précédemment sélectionnés.

Cette demande d'établissement d'une connexion a pour but d'informer le futur noeud récepteur du souhait du noeud émetteur 30 de transmettre des informations sensibles.

Lorsque le noeud récepteur de cette demande de connexion l'accepte en fonction de conditions qui lui sont propres (le noeud n'est par exemple pas déjà en connexion active avec cet aéronef ou avec un autre aéronef, un ou plusieurs espaces de stockage sont disponibles dans le noeud récepteur...), la connexion est établie. L'étape de transmission des données de l'aéronef 30, par exemple, vers l'aéronef 32 acceptant la connexion est alors effectuée (étape S4).

L'algorithme prend fin par l'étape S5 qui met fin à la connexion.

Il convient de noter que, lors de la sélection d'un nouveau meilleur noeud récepteur, deux options peuvent être envisagées :

- la première option consiste à remplacer l'une des plus mauvaises connexions encore actives avec l'aéronef 30 par une connexion avec le nouveau noeud qui vient d'être identifié;

- la seconde option consiste à garder ce nouveau meilleur noeud comme noeud de secours et la connexion avec ce dernier ne sera faite qu'après la perte de communication existante avec un noeud dit courant.

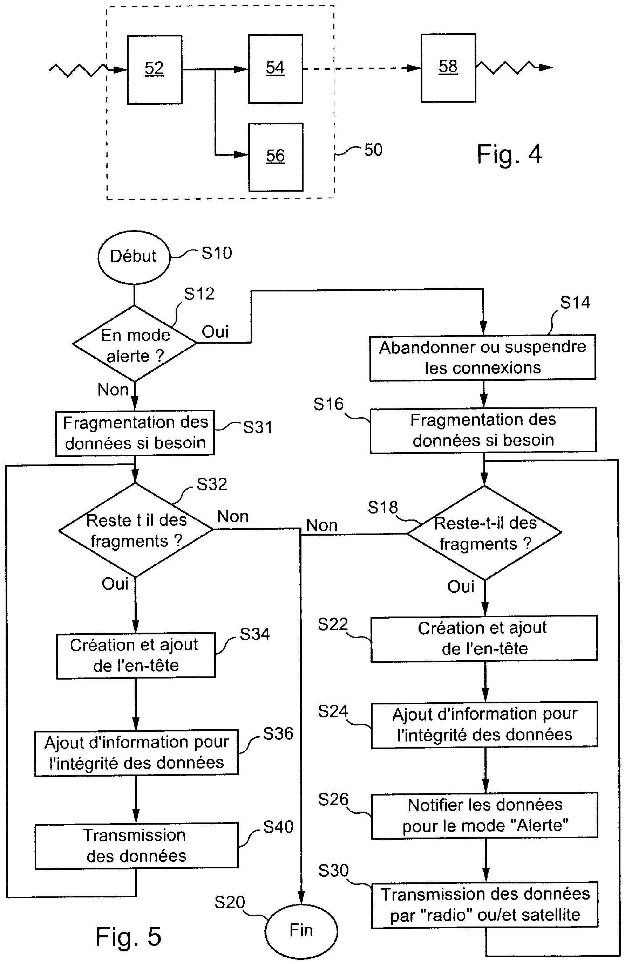

La Figure 4 illustre de façon schématique un système de réception de données 50 embarqué à bord d'un aéronef. L'aéronef concerné est par exemple l'aéronef 32 mentionné ci-dessus qui est le meilleur candidat pour récupérer des données d'enregistreur(s) ou de boite(s) noire(s) de l'aéronef 30 compte tenu du critère de sélection mis en place (exemple : proximité géographique).

Le système 50 comprend des moyens 52 de réception des données transmises par l'aéronef 30 qui sont, par exemple, des moyens de réception radio,, optique, satellite ... selon le lien physique de communication utilisé.

Le système 50 comprend également un espace de stockage de sauvegarde 54 et un espace de stockage réservé 56 au cas où l'espace 54 est indisponible. Les données reçues sont alors stockées dans l'espace approprié.

On notera que l'aéronef 32 comporte les mêmes moyens que ceux de la Figure 1, ce qui rend possible, si le type de communication le permet (communication bidirectionnelle), que l'aéronef 32 transmette ses données à l'aéronef 30.

Lorsque l'aéronef 32 se pose au sol, les données de l'aéronef 30 sont alors récupérées, stockées pendant une durée limitée, éventuellement centralisées par la compagnie aérienne ou une région ou un aéroport en vue d'une éventuelle exploitation après déchiffrement.

La Figure 5 illustre un algorithme d'un procédé de transmission de données selon l'invention.

Cet algorithme est mis en oeuvre à bord de l'aéronef qui va transmettre des données présentes dans ses boites noires ou enregistreurs.

L'algorithme est par exemple mis en oeuvre par le système 16 de la Figure 1 après récupération de données provenant des boites noires ou enregistreurs 12 et 14.

Cet algorithme comprend plusieurs étapes dont une première, notée S10, d'initialisation de l'algorithme.

L'étape suivante S12 de l'algorithme est un test vérifiant si l'aéronef est en mode alerte ou non.

Le mode alerte caractérise le fait qu'un aéronef fait face à un ou plusieurs problèmes critiques. Il s'agit d'un mode qui définit que les communications sortantes de cet aéronef sont prioritaires sur les autres transmissions qui ne sont pas dans ce mode.

Ce mode est activable manuellement ou automatiquement et a pour but de transmettre les données (ou certaines données sélectionnées) contenues dans les boites noires à un aéronef ou à l'ensemble des aéronefs situés à proximité (par exemple les aéronefs 32, 34 et 36 sur la Figure 2) et à forcer l'enregistrement par l'un ou plusieurs de ces aéronefs de cette zone.

On notera que la transmission, aux fins de sauvegarde, de ces données est réalisée par l'intermédiaire d'un moyen de communication qui est choisi par rapport à un critère prédéterminé tel que sa disponibilité ou bien parce qu'il constitue un moyen préférentiel (exemple : radio).

Toutefois, si ce moyen n'est pas utilisable pour une raison quelconque (exemple : indisponibilité du moyen et par exemple perte momentanée du réseau de communication), alors le recours à d'autres moyens de communication est envisagé pour la transmission de données.

Par exemple, un autre moyen de communication peut être sélectionné automatiquement à titre de deuxième moyen préférentiel (exemple : satellite).

Comme on le verra ultérieurement en référence à la procédure de réception des données par un aéronef (noeud) récepteur, certains des aéronefs détectant des informations en mode alerte sont tenus de sauvegarder ces données ainsi que le positionnement géographique de l'aéronef en difficulté dans un espace de stockage de sauvegarde.

Il est prévu que le protocole de communication collecte des informations provenant de l'aéronef en difficulté.

Il convient par ailleurs de noter qu'en mode alerte le système de transmission de données de l'aéronef concerné (par exemple l'aéronef 30 de la Figure 2) peut être apte à transmettre des données des boites noires par l'intermédiaire d'un lien satellite, et ce, jusqu'à une station au sol, afin d'avertir au plus tôt les secours ainsi que l'équipe d'investigation.

Lorsqu'un mode alerte est détecté plusieurs options sont envisageables.

Tout d'abord, il est possible de prévoir un changement du plan de vol d'un aéronef situé dans la zone géographique où se trouve l'aéronef en difficulté afin que le premier puisse suivre ce dernier aussi longtemps que possible et collecter des informations de vol de cet aéronef ainsi que son positionnement. Comme le prévoit l'étape S14 de la Figure 5, en mode alerte il peut également être envisagé de suspendre ou d'abandonner les connexions existantes avec des aéronefs, excepté les connexions déjà établies depuis un ou plusieurs aéronefs en mode alerte, afin de libérer de la bande passante. Ceci permet de fournir le maximum de bande passante à l'aéronef en difficulté et ainsi d'optimiser la collecte de données en provenance de cet aéronef.

On notera également qu'afin d'optimiser le temps de collecte des données provenant de l'aéronef en difficulté il est envisageable de diffuser ces données à destination de plusieurs aéronefs et non d'un seul ou bien de diffuser ces données en utilisant plusieurs couches physiques différentes (radio, optique, satellite ...).

Lorsqu'il est décidé de transmettre hors de l'aéronef des données de boite(s) noire(s) celles-ci sont récupérées par les moyens 22 dans l'espace de stockage 20.

L'étape suivante S16 prévoit de fragmenter les données à transmettre en paquets de données constitués chacun d'un en-tête et d'une charge utile contenant les données utiles.

Cette fragmentation est effectuée en fonction de la couche physique et du protocole de communication utilisés.

Tout paquet est ainsi transmis à un même destinataire.

On notera qu'en cas de diffusion des données à plusieurs aéronefs les mêmes paquets sont par exemple transmis en parallèle à l'ensemble de ces aéronefs.

L'étape suivante S18 est un test permettant de déterminer s'il reste des fragments de données à transmettre. S'il ne reste aucun fragment en attente de transmission, alors il est mis fin à l'algorithme à l'étape S20.

S'il reste des fragments à transmettre, alors l'étape S18 est suivie d'une étape S22 consistant à créer et à ajouter un en-tête dans le signal de données à transmettre (paquet).

Le ou les en-têtes ainsi créés sont utiles pour la gestion des données.

A titre d'exemple, il comporte des balises ou marqueurs indiquant la présence d'informations particulières telles que des informations permettant d'identifier des aéronefs (code)....

L'algorithme comporte une étape suivante S24 qui prévoit d'ajouter de l'information au signal à transmettre afin de garantir l'intégrité des données à transmettre.

Le traitement appliqué pour assurer l'intégrité des données est celui déjà décrit en référence à la Figure 1 et réalisé par les moyens 22.

L'étape suivante S26 prévoit de notifier dans le signal à transmettre l'indication selon laquelle les données à transmettre proviennent d'un aéronef, configuré en mode alerte. Cette indication est par exemple ajoutée à l'en-tête créé à l'étape S22.

L'étape suivante S30 prévoit de transmettre les données en paquets sur le lien physique (soit par lien radio, soit par lien satellite, soit par le lien optique, soit par le lien 4G...) comme déjà décrit plus haut après exécution de l'algorithme de la Figure 3.

Le mécanisme de découverte de topologie décrit en référence à la Figure 3 est adapté à un réseau radio fréquence à noeuds mobiles ainsi qu'à un réseau satellite et doit prendre en compte les aspects de performances afin d'éviter une consommation trop importante de la bande passante et des ressources locales.

On notera à cet égard qu'il est envisageable pour un aéronef souhaitant établir une connexion qu'il diffuse une demande de connexion suivant un compteur/minuteur («timer» en terminologie anglo-saxonne) fonctionnant de façon périodique ou pseudo périodique.

On notera par ailleurs que l'établissement d'une connexion est par exemple effectué au minimum dans l'une des couches protocolaires.

Dans l'exemple de réalisation, la connexion est établie de préférence dans une seule couche car plusieurs connexions à des niveaux protocolaires différents complexifient le système de transmission et le rendent moins performant.

Un réseau radio fréquence très dense comme celui de la flotte d'aéronefs mondiale en vol un instant donné (t) doit être capable de supporter une charge très importante sans altérer son fonctionnement.

Pour ce faire, et pour éviter des possibilités de blocage (exemple : saturation de la bande de fréquences) on limite le nombre de connexions par aéronef.

Ainsi, si N désigne le nombre de connexions sortantes, N' le nombre de connexions entrantes, M le nombre de connexions totales et K le nombre d'emplacements de sauvegarde alors la Demanderesse a établi les relations suivantes :

$$N'=N$$

$$M = 2 \times N$$

$$K = M + 1,$$

le chiffre « 1 » désigne un emplacement de sauvegarde qui est toujours réservé afin d'y stocker les données d'un aéronef en mode alerte.

Dans l'exemple de réalisation, on utilise deux connexions sortantes et deux connexions entrantes.

L'un des moyens de communication utilisés pour transmettre les données utilise un réseau de communication radio bidirectionnelle pour émettre et recevoir des données entre noeuds mobiles.

Un tel réseau n'est pas nécessairement dédié à l'usage prévu pour la mise en oeuvre de l'invention et peut également être utilisé pour assurer une ou plusieurs autres fonctionnalités de l'aéronef.

Le système utilisé est par exemple un système Wifi ou un système WiMax qui fournit la bande passante, la portée (distance maximale dans laquelle la communication est physiquement possible) ainsi que les propriétés nécessaires pour la mise en oeuvre de l'invention (par exemple il faut que la technologie permette d'apporter le niveau de sûreté requis, de gérer de la qualité de services...).

On notera que l'étape de transmission S30 est suivie de l'étape S18 déjà décrite ci-dessus afin de vérifier s'il reste des fragments de données à transmettre.

De retour à l'étape de test S12 déjà décrite ci-dessus, lorsque le mode alerte n'est pas identifié l'étape suivante S31 prévoit d'effectuer une fragmentation des données à transmettre si nécessaire.

Cette étape est identique à l'étape S16 déjà décrite ci-dessus.

L'étape S31 est suivie d'une étape de test S32 permettant de déterminer s'il reste des fragments de données à transmettre.

Dans la négative, cette étape est suivie de l'étape S20 mettant fin à l'algorithme de transmission.

Dans l'affirmative, l'étape S32 est suivie d'une étape S34 qui prévoit de créer et d'ajouter un ou plusieurs en-têtes dans le signal de données à transmettre.

Cette étape est identique à l'étape S22 déjà décrite ci-dessus.

L'étape suivante d'ajout d'informations pour garantir l'intégrité des données (S36) est identique à l'étape S24 déjà décrite ci-dessus.

L'étape suivante S40 prévoit de transmettre les données configurées lors des étapes précédentes sur un lien physique comme déjà décrit plus haut à l'étape S30.

Les données sont ainsi transmises à un aéronef qui a été préalablement sélectionné comme étant le noeud récepteur du réseau qui est le plus adapté à la transmission.

Dans le cas où plusieurs aéronefs valides ont été détectés, c'est-à-dire que plusieurs aéronefs ont été sélectionnés comme répondant à un ou plusieurs critères prédéterminés, une première connexion est effectuée avec l'aéronef le plus adapté parmi ces aéronefs.

En priorité, les données de boite(s) noire(s) émises vers cet aéronef sont alors celles qui sont les plus importantes en cas d'investigation, c'est-à-dire les plus récentes.

Il convient de noter que, dans la mesure du possible, les données sont transmises en temps réel ou quasi-réel, c'est-à-dire au fur et à mesure de l'acquisition de ces données par la ou les boites noires.

Une deuxième connexion est par exemple effectuée avec un autre aéronef sélectionné pour transmettre des données plus anciennes, par exemple celles qui datent de plusieurs minutes (exemple : t - 15 mn).

La deuxième connexion est par exemple établie avec le deuxième « meilleur » pair trouvé lors de la recherche des noeuds mobiles dans le réseau.

On notera que la priorité de transmission est attribuée aux données obtenues en temps réel.

Ainsi, dès la perte du lien physique ou dès la détection d'un meilleur lien, l'algorithme de transmission est exécuté dans le but de rétablir la transmission des données en temps réel.

Ceci se produit même s'il est nécessaire pour cela de mettre fin à une autre transmission active.

L'étape S40 est ensuite suivie par l'étape de test S32 déjà décrite ci-dessus. On notera que la plateforme matérielle utilisée dans le système de transmission 16 de la Figure 1 est par exemple une plateforme ouverte de type PC dont le niveau de confiance est amélioré par l'utilisation d'un composant matériel cryptographique qui est par exemple un module TPM (connu en terminologie anglo-saxonne sous le terme de «Trusted Platform Module ») défini par une organisation appelée TCG connu sous l'appellation « Trusted Computing Group »).

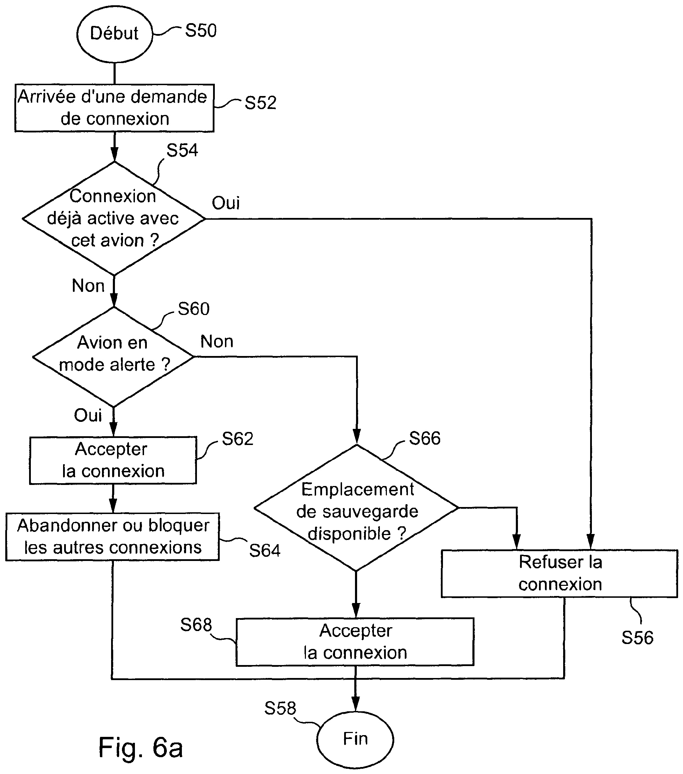

La Figure 6a représente un algorithme d'une partie d'un procédé de réception de données selon l'invention.

Cet algorithme est mis en oeuvre dans un aéronef du réseau mobile tel que celui illustré sur la Figure 2 et par exemple dans l'aéronef 32 qui a été sélectionné par l'aéronef 30 comme étant le meilleur pair de communication.

Cet algorithme débute par une étape S50 d'initialisation de l'algorithme.

Cet algorithme comporte une étape S52 de réception d'une demande de connexion provenant de l'aéronef 30 et est suivie d'une étape de test S54.

Au cours de cette étape, on vérifie si une connexion est déjà active avec l'aéronef 30 dont provient la demande de connexion.

Dans l'affirmative, cette étape est suivie d'une étape S56 de refus de la connexion et il est alors mis fin à l'algorithme par une étape S58.

Si, au contraire, aucune connexion n'est déjà active avec l'aéronef 30, l'étape S54 est suivie d'une étape S60.

Au cours de cette étape un test est pratiqué afin de déterminer si l'aéronef 30 est en mode alerte ou non.

Dans l'affirmative, cette étape est suivie d'une étape S62 visant à accepter la demande de connexion, puis d'une étape S64 visant à mettre fin aux autres communications en cours (abandonner ou bloquer les autres connexions existantes entre l'aéronef sélectionné 32 et d'autres aéronefs).

On notera que le mode alerte est défini dans l'aéronef dont provient la demande de connexion, par exemple, à partir de la détection de certains événements prédéterminés qui peuvent être liés à la détection de pannes critiques et/ou qui sont liés à des mesures inquiétantes de paramètres de vol (exemple : dépassement de seuils prédéterminés).

Le mode alerte est ainsi choisi dans le but de rendre prioritaire la réception des données de boite(s) noire(s) émises par tout noeud mobile situé dans une zone géographique permettant la réception des données.

L'étape S64 est suivie de l'étape S58 mettant fin à l'algorithme.

De retour à l'étape S60, lorsque le résultat du test pratiqué indique que l'aéronef n'est pas configuré en mode alerte, alors une étape suivante de test S66 est effectuée.

Au cours de cette étape on détermine si un espace de stockage est disponible à bord de l'aéronef (emplacement de sauvegarde).

Dans la négative, la connexion est refusée (étape S56).

Au contraire, lorsqu'un espace de stockage est disponible, alors la connexion est acceptée (étape S68).

On notera que lorsque l'aéronef dont est issue la demande de connexion n'est pas configuré en mode alerte, la réception et le stockage de données provenant de cet aéronef ne sont pas privilégiés en cas d'espace de stockage indisponible.

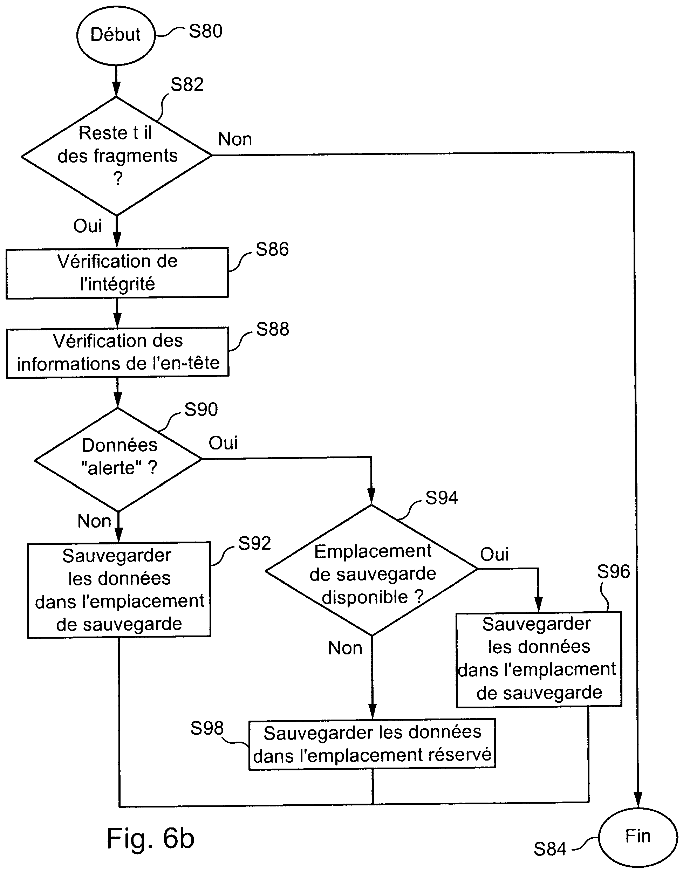

Comme on le verra par la suite en référence à la Figure 6b, il en va différemment lorsque le mode alerte est détecté.

L'algorithme de la Figure 6b détaille plus particulièrement le processus de sauvegarde des données de boite(s) noire(s) recueillies à bord de l'aéronef récepteur sélectionné.

Cet algorithme débute par une étape d'initialisation S80, suivie d'une étape de test S82 vérifiant la présence de fragments de données (paquets) à recevoir.

Dans la négative, cette étape est suivie d'une étape S84 mettant fin à l'algorithme.

Au contraire, s'il reste des fragments de données à recevoir, alors cette étape est suivie d'une étape S86 de vérification de l'intégrité des données reçues.

Les moyens mis en place pour contrôler l'intégrité des données sont connus de l'homme de l'art (ex : utilisation d'une signature par exemple dans les algorithmes MD5 ou RSA). Si les données reçues ne sont pas identiques à celles émises, un traitement est alors prévu pour que l'aéronef émetteur soit alerté et donc que les données puissent être réémises.

L'étape S86 est suivie d'une étape S88 visant à vérifier les informations se trouvant dans le ou les entêtes du signal de données reçues.

Lors de cette étape on procède notamment à l'éventuelle identification d'un marquage ou d'une balise (connu en terminologie anglo-saxonne sous le terme «flag») indiquant au noeud récepteur que le noeud émetteur est un aéronef en difficulté.

L'étape de vérification permet par exemple d'identifier d'autres informations : identifiant de l'émetteur, du récepteur, numéro d'ordre du paquet... Ces informations sont utiles pour organiser et retrouver ensuite les données si nécessaire.

L'étape S88 est suivie d'une étape S90 de test.

Au cours de cette étape, en fonction du résultat de l'étape S88 on détermine si l'aéronef dont sont issues les données de boite(s) noire(s) est en mode alerte ou non.

Dans la négative, cette étape est suivie d'une étape S92 prévoyant de stocker les données reçues dans un espace de stockage disponible (emplacement de sauvegarde).

Au contraire, lorsque le résultat du test pratiqué à l'étape S90 fait apparaître qu'il s'agit de données provenant d'un aéronef en mode alerte, alors cette étape est suivie d'une étape de test S94.

Au cours de cette étape il est vérifié si un espace de stockage est disponible à bord de l'aéronef. En particulier, on vérifie si l'espace de stockage classique est disponible en priorité pour éviter de « remplir » la zone réservée.

Dans le cas où un espace de stockage classique est disponible, alors l'étape S94 est suivie d'une étape S96 prévoyant le stockage des données de boite(s) noire(s) reçues dans cet espace (emplacement de sauvegarde).

Si, au contraire, aucun espace de stockage classique n'est disponible, alors l'étape S94 est suivie d'une étape S98 prévoyant de sauvegarder les données de boite(s) noire(s) dans un espace de stockage réservé (emplacement dédié).

On garantit ainsi l'existence d'un espace de stockage disponible spécifique pour être toujours en mesure de recevoir les données provenant d'un aéronef en mode alerte.

## Revendications

1. Procédé de transmission de données, comportant une étape de transmission de données en vol entre un premier aéronef (30) et au moins un deuxième aéronef (32), les données transmises étant des données stockées dans au moins une boite noire (12, 14) embarquée à bord du premier aéronef (30), le procédé étant **caractérisé en ce qu'**il comprend une étape de vérification par ledit premier aéronef si ledit premier aéronef est en un mode alerte, le mode alerte indiquant que ledit premier aéronef fait face à un ou plusieurs problèmes critiques pour ledit premier aéronef, et, dans le cas où ledit premier aéronef est en mode alerte, une étape d'indication que les données à transmettre proviennent d'un aéronef en mode alerte afin de rendre prioritaire la réception par le deuxième aéronef des données émises par le premier aéronef en mode alerte sur les autres transmissions qui ne sont pas dans ce mode.

2. Procédé selon la revendication 1, dans lequel l'étape de transmission des données est réalisée par l'intermédiaire d'un moyen de communication ayant une bande passante d'au moins 100 kbits/s.

3. Procédé selon la revendication 1 ou 2, **caractérisé en ce qu'**il comporte une étape préalable de sélection d'un moyen de communication parmi plusieurs moyens de communication.

4. Procédé selon la revendication 3, **caractérisé en ce que** les moyens de communication comprennent un moyen radio, un moyen par satellite ou tout autre moyen de communication sans fil.

5. Procédé selon l'une des revendications 1 à 4, **caractérisé en ce que** la transmission des données est effectuée dans un réseau de communication (40) comprenant des noeuds mobiles de communication (30, 32, 34, 36) qui sont des aéronefs en vol.

6. Procédé selon la revendication 5, **caractérisé en ce qu'**il comporte, préalablement à l'étape de transmission, une étape de sélection en vol (S2) d'au moins un noeud mobile de communication, non prédéterminé, ledit au moins un noeud étant sélectionné parmi un ensemble de noeuds mobiles de communication du réseau en fonction d'au moins un critère de sélection prédéterminé.

7. Procédé selon la revendication 6, **caractérisé en ce que** ledit au moins un critère de sélection prédéterminé est l'un au moins des critères suivants : aéronef(s) dont provient un rapport signal sur bruit supérieur à un seuil prédéterminé, aéronef(s) ayant des plans de vols similaires ou identiques, aéronef(s) appartenant à la même compagnie aérienne ou à une même alliance regroupant plusieurs compagnies aériennes, aéronef(s) du même constructeur, aéronef(s) à portée de communication, aéronef le plus éloigné du premier aéronef, aéronef(s) en phase de descente.

8. Procédé selon la revendication 6 ou 7, **caractérisé en ce qu'**il comporte une étape (S3) de demande d'établissement d'une connexion avec ledit au moins un noeud sélectionné, préalablement à la transmission des données.

9. Système (16) de transmission de données embarqué à bord d'un premier aéronef, comportant des moyens de transmission de données en vol entre le premier aéronef (30) et au moins un deuxième aéronef (32), les données transmises étant des données stockées dans au moins une boite noire (12, 14) embarquée à bord du premier aéronef, **caractérisé en ce que** ledit système (16) le système est configuré pour vérifier si ledit premier aéronef est en un mode alerte, le mode alerte indiquant que ledit premier aéronef fait face à un ou plusieurs problèmes critiques pour ledit premier aéronef, et, dans le cas où ledit premier aéronef est en mode alerte, pour indiquer que les données à transmettre proviennent d'un aéronef en mode alerte afin de rendre prioritaire la réception par le deuxième aéronef des données émises par le premier aéronef en mode alerte sur les autres transmissions qui ne sont pas dans ce mode.

10. Système de communication comportant un système de transmission de données selon la revendication 9 embarqué à bord du premier aéronef et un système (50) de réception de données embarqué à bord du deuxième aéronef, **caractérisé en ce que** ledit système de réception de données comporte des moyens (52) de réception en vol en provenance du premier aéronef (30), de données stockées dans au moins une boite noire (12, 14) embarquée à bord du premier aéronef.

11. Aéronef (30 ; 32) **caractérisé en ce qu'**il comprend un système de transmission (16) selon la revendication 9 et/ou un système de communication (50) selon la revendication 10.

**Patentansprüche**

1. Verfahren zum Senden von Daten, umfassend einen Schritt des Sendens von Daten im Flug zwischen einem ersten Flugzeug (30) und mindestens einem zweiten Flugzeug (32), wobei die gesendeten Daten Daten sind, die in mindestens einer an Bord des ersten Flugzeugs (30) befindlichen Black Box (12, 14) gespeichert sind, wobei das Verfahren **dadurch gekennzeichnet ist, dass** es einen Schritt des Überprüfens durch das erste Flugzeug umfasst, ob sich das erste Flugzeug in einem Alarmmodus befindet, wobei der Alarmmodus anzeigt, dass das erste Flugzeug einem oder mehreren für das erste Flugzeug kritischen Problemen gegenübersteht, und im Fall, dass sich das erste Flugzeug im Alarmmodus befindet, einen Schritt des Anzeigens, dass die zu sendenden Daten von einem Flugzeug im Alarmmodus stammen, um den Empfang der Daten, die vom ersten Flugzeug im Alarmmodus ausgesendet werden, durch das zweite Flugzeug gegenüber den anderen Sendevorgängen, die sich nicht im diesem Modus befinden, zu priorisieren.

2. Verfahren nach Anspruch 1, bei dem der Schritt des Sendens der Daten mithilfe eines Kommunikationsmittels mit einer Bandbreite von mindestens 100 kBit/s realisiert wird.

3. Verfahren nach Anspruch 1 oder 2, **dadurch gekennzeichnet, dass** es einen vorherigen Schritt des Auswählens eines Kommunikationsmittels unter mehreren Kommunikationsmitteln umfasst.

4. Verfahren nach Anspruch 3, **dadurch gekennzeichnet, dass** die Kommunikationsmittel ein Funkmittel, ein Satellitenmittel oder jegliches andere drahtlose Kommunikationsmittel umfassen.

5. Verfahren nach einem der Ansprüche 1 bis 4, **dadurch gekennzeichnet, dass** das Senden der Daten in einem Kommunikationsnetz (40) erfolgt, das mobile Kommunikationsknoten (30, 32, 34, 36) umfasst, die Flugzeuge sind.

6. Verfahren nach Anspruch 5, **dadurch gekennzeichnet, dass** es vor dem Schritt des Sendens einen Schritt des Auswählens mindestens eines nicht vorbestimmten mobilen Kommunikationsknotens im Flug (S2) umfasst, wobei der mindestens eine Knoten aus einer Gesamtheit mobiler Kommunikationsknoten des Netzes nach mindestens einem vorbestimmten Auswahlkriterium ausgewählt wird.

7. Verfahren nach Anspruch 6, **dadurch gekennzeichnet, dass** das mindestens eine vorbestimmte Auswahlkriterium mindestens eines der folgenden Kriterien ist: Flugzeug(e), von dem/denen ein Signal-Rausch-Verhältnis über einem vorbestimmten Schwellenwert stammt, Flugzeug(e) mit ähnlichen oder gleichen Flugplänen, Flugzeug(e), das/die derselben Luftfahrtgesellschaft oder einer selben Allianz gehört/gehören, die mehrere Luftfahrtgesellschaften zusammenfasst, Flugzeug(e) desselben Herstellers, Flugzeug(e) in Kommunikationsreichweite, vom ersten Flugzeug am weitesten entferntes Flugzeug, Flugzeug(e) in der Landephase.

**8.** Verfahren nach Anspruch 6 oder 7, **dadurch gekennzeichnet, dass** es vor dem Senden der Daten einen Schritt (S3) des Anfragens zur Herstellung einer Verbindung mit dem mindestens einen ausgewählten Knoten umfasst.

**9.** System (16) zum Senden von an Bord eines ersten Flugzeugs befindlichen Daten, umfassend Mittel zum Senden der Daten im Flug zwischen dem ersten Flugzeug (30) und mindestens einem zweiten Flugzeug (32), wobei die gesendeten Daten Daten sind, die in mindestens einer an Bord des ersten Flugzeugs befindlichen Black Box (12, 14) gespeichert sind,
dadurch gekennzeichnet, dass das System (16) das System dazu konfiguriert ist, zu überprüfen, ob sich das erste Flugzeug in einem Alarmmodus befindet, wobei der Alarmmodus anzeigt, dass das erste Flugzeug einem oder mehreren für das erste Flugzeug kritischen Problemen gegenübersteht, und im Fall, dass sich das erste Flugzeug im Alarmmodus befindet, anzuzeigen, dass die zu sendenden Daten von einem Flugzeug im Alarmmodus stammen, um den Empfang der Daten, die vom ersten Flugzeug im Alarmmodus ausgesendet werden, durch das zweite Flugzeug gegenüber den anderen Sendevorgängen, die sich nicht im diesem Modus befinden, zu priorisieren.

**10.** Kommunikationssystem, umfassend ein an Bord des ersten Flugzeugs befindliches System zum Senden von Daten nach Anspruch 9 und ein an Bord des zweiten Flugzeugs befindliches System (50) zum Empfangen von Daten, **dadurch gekennzeichnet, dass** das System zum Empfangen von Daten Mittel (52) zum Empfangen von Daten aus dem ersten Flugzeug (30) im Flug, von Daten, die in mindestens einer an Bord des ersten Flugzeugs befindlichen Black Box (12, 14) gespeichert sind, umfasst.

**11.** Flugzeug (30; 32), **dadurch gekennzeichnet, dass** es ein System zum Senden (16) nach Anspruch 9 und/oder ein Kommunikationssystem (50) nach Anspruch 10 umfasst.

**Claims**

**1.** Data transmission method, including a step of transmitting data in flight between a first aircraft (30) and at least one second aircraft (32), the transmitted data being data stored in at least one black box (12, 14) housed on board the first aircraft (30),
the method being **characterised in that** it comprises a step of checking, by said first aircraft, whether said first aircraft is in an alert mode, the alert mode indicating that said first aircraft is encountering one or more problems that are critical to said first aircraft, and, if said first aircraft is in alert mode, a step of indicating that the data to be transmitted are coming from an aircraft in alert mode, so as to give the reception, by the second aircraft, of the data transmitted by the first aircraft in alert mode priority over the other transmissions that are not in this mode.

**2.** Method according to claim 1, wherein the data transmission step is carried out by way of a communication means having a bandwidth of at least 100 kbits/s.

**3.** Method according to claim 1 or 2, **characterised in that** it includes a preliminary step of selecting one communication means from among a plurality of communication means.

**4.** Method according to claim 3, **characterised in that** the communication means comprise a radio means, a satellite means or any other wireless communication means.

**5.** Method according to one of claims 1 to 4, **characterised in that** the data transmission is performed in a communication network (40) comprising mobile communication nodes (30, 32, 34, 36) that are aircraft in flight.

**6.** Method according to claim 5, **characterised in that** it includes, prior to the transmission step, a step (S2) of selecting, in flight, at least one non-predetermined mobile communication node, said at least one node being selected from among a set of mobile communication nodes of the network on the basis of at least one predetermined selection criterion.

**7.** Method according to claim 6, **characterised in that** said at least one predetermined selection criterion is at least one of the following criteria: one or more aircraft from which a signal-to-noise ratio greater than a predetermined threshold originates, one or more aircraft having identical or similar flight plans, one or more aircraft belonging to the same airline or to one and the same alliance incorporating several airlines, one or more aircraft of the same manufacturer, one or more aircraft within communication range, one or more aircraft furthest from the first aircraft, aircraft in descent phase.

**8.** Method according to claim 6 or 7, **characterised in that** it includes a step (S3) of requesting establishment of a connection with said at least one selected node, prior to the data transmission.

9. Data transmission system (16) housed on board a first aircraft, including means for transmitting data in flight between the first aircraft (30) and at least one second aircraft (32), the transmitted data being data stored in at least one black box (12, 14) housed on board the first aircraft, **characterised in that** said system (16) the system is configured to check whether said first aircraft is in an alert mode, the alert mode indicating that said first aircraft is encountering one or more problems that are critical to said first aircraft, and, if said first aircraft is in alert mode, to indicate that the data to be transmitted are coming from an aircraft in alert mode, so as to give the reception, by the second aircraft, of the data transmitted by the first aircraft in alert mode priority over the other transmissions that are not in this mode.

10. Communication system including a data transmission system according to claim 9 housed on board the first aircraft and a data reception system (50) housed on board the second aircraft, **characterised in that** said data reception system includes means (52) for receiving, in flight from the first aircraft (30), data stored in at least one black box (12, 14) housed on board the first aircraft.

11. Aircraft (30; 32), **characterised in that** it comprises a transmission system (16) according to claim 9 and/or a communication system (50) according to claim 10.

Fig. 1

Fig. 2

Recherche noeud(s) ⤙ S1

Sélection ⤙ S2

Fig. 3    Demande connexion ⤙ S3

Transmission ⤙ S4

Fin de connexion ⤙ S5

52 → 54 ⟶ 58

56

~50

# Fig. 4

Début —S10

S12

En mode alerte ? —Oui→ S14

Abandonner ou suspendre les connexions

Non

Fragmentation des données si besoin —S31

S16
Fragmentation des données si besoin

S32
Reste t il des fragments ? —Non→ Non→ S18 Reste-t-il des fragments ?

Oui

Création et ajout de l'en-tête —S34

S22
Création et ajout de l'en-tête

Ajout d'information pour l'intégrité des données —S36

S24
Ajout d'information pour l'intégrité des données

Transmission des données —S40

S26
Notifier les données pour le mode "Alerte"

S30
Transmission des données par "radio" ou/et satellite

S20
Fin

# Fig. 5

Début — S50

Arrivée d'une demande
de connexion — S52

S54

Connexion
déjà active avec
cet avion ? — Oui

Non

S60

Avion en
mode alerte ? — Non

Oui

Accepter
la connexion — S62

Abandonner ou bloquer
les autres connexions — S64

S66

Emplacement
de sauvegarde
disponible ?

Refuser la
connexion

S56

S68 — Accepter
la connexion

S58 — Fin

Fig. 6a

Début — S80

S82

Reste t il des fragments ? — Non

Oui

Vérification de l'intégrité — S86

Vérification des informations de l'en-tête — S88

S90

Données "alerte" ? — Oui

Non

Sauvegarder les données dans l'emplacement de sauvegarde — S92

S94

Emplacement de sauvegarde disponible ? — Oui

Non

S96

Sauvegarder les données dans l'emplacment de sauvegarde

S98 — Sauvegarder les données dans l'emplacement réservé

Fin

S84

## Fig. 6b

**EP 2 638 528 B1**

## RÉFÉRENCES CITÉES DANS LA DESCRIPTION

**Documents brevets cités dans la description**

- US 20040039497 A